# EUROPÄISCHE PATENTSCHRIFT

(11) **EP 3 638 505 B1**
(45) Veröffentlichungstag und Bekanntmachung des Hinweises auf die Patenterteilung: **11.03.2026**
(21) Anmeldenummer: 18728890.7
(22) Anmeldetag: 04.06.2018
(51) Int. Cl.: B32B 27/08

(54) **MEHRLAGIGE POLYMERVERBUNDVORRICHTUNG MIT EINGESCHLOSSENEN BAUTEILEN UND VERFAHREN ZUR HERSTELLUNG VON MEHRLAGIGEN POLYMERVERBUNDVORRICHTUNGEN MIT EINGESCHLOSSENEN BAUTEILEN**
MULTIPLY POLYMER COMPOSITE DEVICE WITH ENCLOSED COMPONENTS AND METHOD FOR PRODUCING MULTIPLY POLYMER COMPOSITE DEVICES WITH ENCLOSED COMPONENTS
DISPOSITIF À COMPOSITE POLYMÈRE MULTICOUCHE AVEC PIÈCES STRUCTURALES INCLUSES ET PROCÉDÉ DE FABRICATION DE DISPOSITIFS À COMPOSITE POLYMÈRE MULTICOUCHE AVEC PIÈCES STRUCTURALES INCLUSES

(30) Priorität: 13.06.2017 DE 102017005609
(43) Veröffentlichungstag der Anmeldung: 22.04.2020
(73) Patentinhaber: MB Automation GmbH & Co. KG, 93426 Roding (DE)
(72) Erfinder: LUKOVIC, Vidoje, Roding 93426 (DE); BRUNNER, Anton, 93444 Bad Koetzting (DE); EDERER, Martin, 93483 Poesing (DE)
(74) Vertreter: Schmidt, Steffen J.
(86) Internationale Anmeldenummer: PCT/EP2018/064583
(87) Internationale Veröffentlichungsnummer: WO 2018/228838

(56) Entgegenhaltungen:
- WO-A1-2013/085723
- WO-A1-2014/149926
- DE-A1- 102009 060 862
- DE-A1- 102015 205 081
- DE-A1- 19 533 983
- UNKNOWN: "Vicat-Erweichungstemperatur", XP002782881, Retrieved from the Internet <URL:http://wiki.polymerservice-merseburg.de/index.php/Vicat-Erweichungstemperatur> [retrieved on 20180709]

## Beschreibung

### Hintergrund

Hier werden eine mehrlagige Polymerverbundvorrichtung mit eingeschlossenen Bauteilen und ein Verfahren zur Herstellung von mehrlagigen Polymerverbundvorrichtungen mit eingeschlossenen Bauteilen beschrieben. Weiter wird eine Vorrichtung zur Herstellung von mehrlagigen Polymerverbundvorrichtungen beschrieben.

Die hier beschriebenen Polymerverbundvorrichtungen können beispielsweise ein Scheckkartenformat haben, zum Beispiel nach ISO/IEC 7810.

Mehrlagige Polymerverbundvorrichtungen mit eingeschlossenen Bauteilen, zum Beispiel sogenannte Displaykarten, sind als zum Stand der Technik gehörig bekannt. Die eingeschlossenen Bauteile (Batterien, Anzeigeelemente, Sensoren, etc.) haben eine räumliche Ausdehnung. Jedoch ist in den meisten Anwendungsfällen eine ebene Oberfläche der Polymerverbundvorrichtungen, zum Beispiel der Displaykarten, sowohl auf der Vorderseite als auch auf der Rückseite gewünscht. Daher ist es nötig, die räumliche Ausdehnung der eingeschlossenen Bauteile zu kompensieren. Hohlräume oder Gaseinschlüsse in den Polymerverbundvorrichtungen, welche die Haltbarkeit und die mechanische Belastbarkeit der Polymerverbundvorrichtungen negativ beeinflussen könnten, sind unerwünscht.

Gleichzeitig sind herkömmliche Heißlaminationsverfahren nicht oder kaum zur Herstellung von mehrlagigen Polymerverbundvorrichtungen mit eingeschlossenen Bauteilen geeignet, da die hierzu benötigten hohen Temperaturen und Drücke die eingeschlossenen bzw. einzuschließenden Bauteile beschädigen können.

Eine bekannte Möglichkeit zur Implementierung von mehrlagigen Polymerverbundvorrichtungen mit ebenen Oberflächen ist es, die einzelnen Lagen der Polymerverbundvorrichtung an die Geometrie der eingeschlossenen bzw. einzuschließenden Bauteile anzupassen. Beispielsweise können Ausnehmungen, welche zur Geometrie der einzuschließenden Bauteile korrespondieren, durch ein Stanzverfahren in die einzelnen Lagen eingebracht werden, sodass die räumliche Ausdehnung der Bauteile kompensiert wird und die Polymerverbundvorrichtung ebene Oberflächen aufweist.

Ein exaktes Stanzen der Ausnehmungen, welche jeweils zur Geometrie der einzuschließenden Bauteile korrespondieren, ist jedoch insbesondere bei einer Vielzahl von einzuschließenden Bauteilen sehr aufwendig und erfordert eine hohe Präzision des Stanzverfahrens.

Eine bekannte Weiterentwicklung dieses Fertigungsverfahrens sieht vor, dass die einzelnen Lagen der Polymerverbundvorrichtung mit Ausnehmungen versehen werden, welche zur Kompensation der räumlichen Ausdehnung der Bauteile geeignet, jedoch nur ungefähr an die Geometrie der einzelnen Bauteile angepasst sind. Um das Entstehen von Hohlräumen zu vermeiden, welche insbesondere die mechanische Belastbarkeit der Polymerverbundvorrichtungen nachteilig beeinflussen, wird ein Füll- oder Klebstoff in die Ausnehmungen eingebracht. Dieser Füll- oder Klebstoff ist dazu geeignet, sich während der Fertigung der Polymerverbundvorrichtungen zu verflüssigen und hierdurch die Bauteile zu umschließen und zu fixieren. Der Erweichungspunkt des Füll- oder Klebstoffs liegt hierbei unterhalb einer Temperaturschwelle ab der mit einer Beschädigung der Bauteile zu rechnen ist.

EP 2 596 950 B1 offenbart ein Verfahren zur Herstellung von Folienverbundmaterialien mit eingeschlossenen Bauteilen. Hierbei wird die Ausdehnung von einzuschließenden Bauteilen durch Ausnehmungen im Folienverbundmaterial kompensiert. Um Hohlräume zu vermeiden, wird ein Ausgleichsmaterial in das Folienverbundmaterial eingebracht, wobei das Ausgleichsmaterial einen niedrigeren Erweichungspunkt aufweist als das umgebende Folienverbundmaterial. Das Ausgleichsmaterial kann zum Beispiel ein thermisch aktivierbarer Klebstoff sein. Wird das Folienverbundmaterial im Zuge der Fertigung über den Erweichungspunkt des Ausgleichsmaterials hinaus erwärmt, umfließt das Ausgleichsmaterial die eingeschlossenen Bauteile und fixiert diese.

EP 2 085 914 B1 offenbart eine Polymerkarte sowie ein Verfahren zur Herstellung derselben. Die Polymerkarte weist ein Modul bzw. Displayelement auf, welches von einer Klebstoffschicht umgeben ist. Die Klebstoffschicht umfließt hierbei das Modul bzw. das Displayelement und ist thermisch aushärtbar.

Ein Nachteil der bekannten Polymerverbundvorrichtungen bzw. der zugehörigen Fertigungsverfahren ist, dass Hohlräume nicht vollständig vermieden werden können, zum Beispiel mangels Füllmaterials in den Ausnehmungen. Weiter ist es immer noch nötig, Ausnehmungen, wenn auch nur ungefähr den Geometrien der aufzunehmenden elektronischen Bauteile entsprechend, zu fertigen. Dies erhöht den Fertigungsaufwand der Polymerverbundvorrichtung erheblich.

Ein weiterer Nachteil der bekannten Polymerverbundvorrichtungen bzw. der zugehörigen Fertigungsverfahren ist eine aufwändige und schwierige Temperaturführung während des Fertigungsprozesses. Insbesondere beim Erwärmen eines Füll- oder Klebstoffs, welcher ungleichmäßig und über verschiedene Lagen der Polymerverbundvorrichtung verteilt ist, ist eine gleichmäßige thermische Aktivierung des Füll- oder Klebstoff erschwert. Zum einen befinden sich Teile des Füll- oder Klebstoffs in verschiedenen Schichten, zum anderen wirkt das umgebende Polymermaterial, welches einen höheren Erweichungspunkt als der Füll- oder Klebstoff hat, wärmeisolierend.

Eine bekannte Anwendungen von Polymerverbundvorrichtungen, insbesondere von Polymerkarten, ist eine Authentifizierung eines Bedieners einer Datenverarbeitungsvorrichtung, zum Beispiel eines Heimrechners im Rahmen von Internet-Bankgeschäften (in Englisch: Onlinebanking).

Aus der DE 10 2015 205 081 A1 ist ein Wellrohr bekannt, das eine äußere Schicht aus Polyamid, eine zusätzliche äußere Schicht aus Polyamid, eine mittlerer Schicht aus Polyethylen und eine innere Schicht aus Polyamid aufweist. Das Material der mittleren Schicht ist so gewählt, dass es mit den Materialien der angrenzenden Schichten keine Verbindung eingeht. Dabei sind die Schichten unterschiedlich gefärbt. Hierdurch weist das Wellrohr eine verbesserte Verschleißanzeige auf.

Aus der WO 2013/085723 A1 ist ein Gegenstand mit einer Verbundstruktur bekannt. Zur Herstellung des Gegenstands wird zunächst ein Band mehrlagig gewickelt, wobei das Band mit Polymerharz imprägnierte Fasern aufweist. Anschließend erfolgen eine Erwärmung, so dass das Polymerharz weich wird und eine Druckbehandlung in einer Presse, durch die eine Verfestigung stattfindet und Lufteinschlüsse beseitigt werden.

Weiterer technologischer Hintergrund wird durch das nachveröffentlichte Dokument "Vicat-Erweichungstemperatur" der Polymer Service GmbH Merseburg offenbart. Das Dokument offenbart in tabellarischer Form die VICAT-Erweichungstemperaturen für verschiedene ausgewählte Kunststoffe.

Weiter offenbart das Dokument WO 2014/149926 A1 eine Polymerkarte sowie ein Verfahren zur Herstellung derselben. Die Polymerkarte weist hierbei zumindest eine thermoplastische Schicht mit einer Ausnehmung auf. Zudem offenbart das auch Dokument DE 195 33 983 A1 ein Beispiel für eine Chipkarte. Die offenbarte Chipkarte weist elektronische Bauteile auf, die zwischen zwei Schichten aus Polymermaterial angeordnet sind.

### Zu lösendes Problem

Trotz vorhandener Lösungen besteht weiter Bedarf an einer verbesserten Polymerverbundvorrichtung mit eingeschlossenen Bauteilen.

Es ist daher die Aufgabe, eine verbesserte mehrlagige Polymerverbundvorrichtung mit eingeschlossenen Bauteilen bereitzustellen.

Zudem sollen ein zugehöriges Fertigungsverfahren sowie eine zugehörige Fertigungsvorrichtung für die verbesserte mehrlagige Polymerverbundvorrichtung bereitgestellt werden.

Eine Fertigung der Polymerverbundvorrichtung soll erleichtert werden, die Zahl der nötigen Arbeitsschritte reduziert und/oder vereinfacht werden und die Anzahl der benötigten Komponenten soll reduziert werden.

### Hier vorgestellte Lösung

Diese Aufgabe löst eine mehrlagige Polymerverbundvorrichtung nach dem Anspruch 1 und ein Herstellungsverfahren nach dem Anspruch 8.

Vorteilhafte Ausgestaltungen werden durch die abhängigen Ansprüche definiert.

Eine kartenförmige Polymerverbundvorrichtung umfasst eine erste thermoplastische Abdeckschicht aus einem Polymermaterial mit einer ersten Erweichungstemperatur und eine zweite thermoplastische Abdeckschicht aus einem Polymermaterial mit einer zweiten Erweichungstemperatur. Weiter umfasst die Polymerverbundvorrichtung eine Trägerschicht, welche zwischen der ersten Abdeckschicht und der zweiten Abdeckschicht angeordnet ist. Eine Innenschicht, welche aus zumindest einer ersten thermoplastische Innenschichtlage aus einem Polymermaterial mit einer dritten Erweichungstemperatur gebildet ist, ist zwischen der ersten Abdeckschicht und der zweiten Abdeckschicht angeordnet. Die Innenschicht umgibt materialschlüssig zumindest teilweise die Trägerschicht. Die dritte Erweichungstemperatur ist geringer als die erste Erweichungstemperatur und geringer als die zweite Erweichungstemperatur. Die erste Abdeckschicht und die zweite Abdeckschicht sind in Anlage zur Innenschicht angeordnet.

Ein Vorteil der Polymerverbundvorrichtung ist, dass die zumindest eine Innenschichtlage sich bei einem Erwärmen der Polymerverbundvorrichtung bereits ab der dritten Erweichungstemperatur erweicht/verflüssigt, während die beiden Abdeckschichten zumindest bis zu einer ersten und/oder zweiten Erweichungstemperatur formstabil bleiben. Die zumindest eine Innenschichtlage aus Polymermaterial umformt/umschließt die zwischen den Abdeckschichten befindliche Trägerschicht, welche insbesondere elektronische Bauteile aufweisen kann. Somit muss die Innenschichtlage nicht oder nur im Wesentlichen der Geometrie der Trägerschicht und/oder der auf der Trägerschicht befindlichen Bauteile angepasst werden. Weiter ist es nicht nötig einen zusätzlichen Füll- oder Klebstoff in die Polymerverbundvorrichtung einzubringen. Hierdurch wird die Temperaturführung in einem Fertigungsprozess vereinfacht, da nur die Erweichungstemperaturen der zumindest einen Innenschichteinlage und der Abdeckschichten berücksichtigt werden müssen, wobei die Erweichungstemperaturen der beiden Abdeckschichten identisch sein können. Eine gleichmäßige Erwärmung der zumindest einen Innenschichtlage ist wünschenswert, jedoch nicht zwingend notwendig, da durch die Erweichung/Verflüssigung der zumindest einen Innenschichtlage Fertigungs- und/oder Prozessungenauigkeiten ausgeglichen werden. Die zumindest eine erweichte und/oder verflüssigte Innenschichtlage kann sich nach einem absenken der Temperatur der Polymerverbundvorrichtung wieder verfestigen und eine fixe und/oder materialschlüssige und/oder adhäsive Verbindung mit der Trägerschicht und/oder mit zumindest einer der Abdeckschichten herstellen.

Der Fertigungsprozess kann somit vereinfacht und/oder beschleunigt werden.

Die Polymerverbundvorrichtung kann zumindest eine Anzeigevorrichtung umfassen, die zwischen der ersten Abdeckschicht und der zweiten Abdeckschicht angeordnet ist. Insbesondere kann die Anzeigevorrichtung auf der Trägerschicht angeordnet sein.

Die Anzeigevorrichtung kann zum Beispiel eine PLCD oder LCD Anzeige sein. Insbesondere kann die Anzeigevorrichtung ein elektronisches Papier ("ePaper-Display") sein. Eine Anzeigehelligkeit der Anzeigevorrichtung kann variabel einstellbar sein.

Vorteile eines elektronischen Papiers sind zum Beispiel, dass dieses besonders platzsparend bzw. mit einer geringen Display-Dicke gefertigt werden kann und dass das elektronische Papier biegsam bzw. flexibel ist, sodass es zumindest bei einer beschränkten bzw. limitierten Deformation der Polymerverbundvorrichtung nicht beschädigt wird. Weiter benötigt ein elektronisches Papier nur vergleichsweise geringe Energiemengen zur Anzeige optisch erkennbarer Zeichen, sodass eine Energieversorgung bzw. ein Platzbedarf für eine Energieversorgung, zum Beispiel für eine Batterie, reduziert werden kann.

Die erste Abdeckschicht und/oder die zweite Abdeckschicht können, insbesondere im Bereich der Anzeigevorrichtung, zumindest einen teilweise transparenten und/oder kratzfesten Abschnitt aufweisen, sodass zumindest ein Teil der zumindest einen Anzeigevorrichtung für einen Betrachter und/oder ein elektronisches Auslesegerät optisch erkennbar/auslesbar ist.

Die erste und/oder die zweite Abdeckschicht und/oder ein teilweise transparenter Bereich der ersten und/oder der zweiten Abdeckschicht können eine matte oder eine glänzende Oberfläche aufweisen.

Möglich sind Ausführungsformen der Polymerverbundvorrichtung, welche eine erste und/oder zweite Abdeckschicht aufweisen, die jeweils mehrere (Teil-) Polymermaterialien mit verschiedenen Erweichungstemperaturen umfassen. Bei diesen Ausführungsformen ist die erste bzw. die zweite Erweichungstemperatur jeweils die Erweichungstemperatur des (Teil-) Materials mit der geringsten Erweichungstemperatur.

Weiter kann die zumindest eine thermoplastische Innenschichtlage zumindest im Bereich der Anzeigevorrichtung zumindest teilweise transparent sein.

Möglich sind Ausführungsformen der Polymerverbundvorrichtung, welche eine Innenschicht aufweisen, welche zumindest eine Innenschichtlage aufweist, die aus mehreren Polymermaterialien mit verschiedenen Erweichungstemperaturen besteht. Bei diesen Ausführungsformen ist die dritte Erweichungstemperatur die Erweichungstemperatur des Materials mit der geringsten Erweichungstemperatur.

Die mehrlagige Polymerverbundvorrichtung umfasst weiter zumindest eine erste, insbesondere wiederaufladbare, Batterie.

Weiter weist die mehrlagige Polymerverbundvorrichtung einen ersten Überhitzungsschutz und, optional, einen zweiten Überhitzungsschutz auf. Der erste und, optional, der zweite Überhitzungsschutz weisen Polymermaterialien auf, deren Erweichungstemperaturen größer als die dritte Erweichungstemperatur sind. Der erste und/oder der zweite Überhitzungsschutz können jeweils teilweise oder vollständig aus Polymermaterialien, insbesondere aus Polycarbonat, bestehen. In anderen Ausführungsformen können der erste und/oder der zweite Überhitzungsschutz teilweise oder vollständig aus weiteren Materialien, zum Beispiel aus Siliziumdioxid, bestehen.

Der erste Überhitzungsschutz ist zwischen der ersten Batterie und der ersten Abdeckschicht, insbesondere anliegend an einer der ersten Abdeckschicht zugewandten Oberfläche der ersten Batterie, angeordnet.

Ergänzend kann der erste Überhitzungsschutz auch zwischen der zumindest einen Anzeigevorrichtung und der ersten Abdeckschicht, insbesondere anliegend an einer der ersten Abdeckschicht zugewandten Oberfläche der Anzeigevorrichtung, angeordnet sein.

Der zweite Überhitzungsschutz kann zwischen der ersten Batterie und der zweiten Abdeckschicht, insbesondere anliegend an einer der zweiten Abdeckschicht zugewandten Oberfläche der ersten Batterie angeordnet sein.

Alternativ oder ergänzend kann der zweite Überhitzungsschutz auch zwischen der zumindest einen Anzeigevorrichtung und der zweiten Abdeckschicht, insbesondere anliegend an einer der zweiten Abdeckschicht zugewandten Oberfläche der Anzeigevorrichtung, angeordnet sein.

Der erste und/oder der zweite Überhitzungsschutz können so ausgebildet und angeordnet sein, dass sie sowohl die erste Batterie als auch die zumindest eine Anzeigevorrichtung und/oder weitere Bauteile gleichzeitig bedecken/vor einer Überhitzung schützen.

Der erste und/oder der zweite Überhitzungsschutz kann eine Mehrzahl von elektronischen Bauteilen bedecken/vor einer Überhitzung schützen.

Ein Vorteil der Verwendung von einem oder mehreren Überhitzungsschützen ist der Schutz von besonders wärmeempfindlichen Elementen, zum Beispiel der Anzeigevorrichtung oder der ersten Batterie. Durch einen Überhitzungsschutz können insbesondere jene Elemente vor einer Überhitzung geschützt werden, welche nächstliegend zu einer der Abdeckschichten positioniert sind. Eine der Polymerverbundvorrichtung von außen zugeführte Wärme erreicht die wärmeempfindlichen Elemente somit nicht oder nur vermindert und/oder mit einer zeitlichen Verzögerung, während die zumindest eine Innenschichtlage erweicht/verflüssigt wird. Zudem bieten der erste und/oder der zweite Überhitzungsschutz einen zusätzlichen Schutz für empfindliche Bauteile vor hohen Drücken bzw. Druckspitzen, wie sie zum Beispiel während einer Laminierung auftreten können.

Ein weiterer Vorteil des ersten und/oder des zweiten Überhitzungsschutzes ist es, dass eine Deformation von wärme- und/oder druckempfindlichen Bauteilen unterbunden oder zumindest vermindert werden kann. So können zum Beispiel Anzeigevorrichtungen aus elektronischem Papier bei hohen Temperaturen, wie sie zum Beispiel bei Laminationsvorgängen auftreten können, Wölbungen oder wellenförmige Oberflächenstrukturen ausbilden. Eine solche Deformation kann durch den ersten und/oder den zweiten Überhitzungsschutz zumindest teilweise unterbunden werden.

Der erste und/oder der zweite Überhitzungsschutz können transparent sein.

Die Innenschicht der mehrlagigen Polymerverbundvorrichtung kann eine zweite thermoplastische, insbesondere transparente, Innenschichtlage aufweisen, wobei die Erweichungstemperatur der zweiten thermoplastischen Innenschichtlage gleich oder geringer als die dritte Erweichungstemperatur ist.

Weiter kann die Innenschicht der mehrlagigen Polymerverbundvorrichtung eine dritte, eine vierte, eine fünfte und/oder eine sechste thermoplastische, insbesondere transparente, Innenschichtlage aufweisen, wobei die Erweichungstemperatur der dritten, vierten, fünften und/oder sechsten thermoplastischen Innenschichtlage jeweils gleich oder geringer als die dritte Erweichungstemperatur ist. Die Innenschicht der mehrlagigen Polymerverbundvorrichtung kann eine Mehrzahl von, insbesondere transparenten, Innenschichtlagen aufweisen, wobei die Erweichungstemperaturen der Innenschichtlagen jeweils kleiner oder gleich der dritten Erweichungstemperatur sind. Die Erweichungstemperaturen der Innenschichtlagen können identisch oder voneinander verschieden sein. Die optischen Eigenschaften der Innenschichtlagen können voneinander verschieden sein.

Ein Vorteil einer Implementierung von mehreren Innenschichtlagen, welche gemeinsam die Innenschicht bilden ist es, dass ein vollständiges Umgeben der Trägerschicht und/oder weiterer Elemente mit der Innenschicht möglich ist. Die Fixierung und/oder die materialschlüssige Umschließung der Trägerschicht mit Polymermaterial kann somit verbessert werden.

Die mehrlagige Polymerverbundvorrichtung kann eine zweite, insbesondere wiederaufladbare, Batterie /einen zweiten Akkumulator umfassen. Die zweite Batterie /der zweite Akkumulator kann durch den ersten und/oder den zweiten Überhitzungsschutz geschützt werden. Weiter ist es möglich, ein erstes elektronisches Bauteil, zum Beispiel die erste Batterie, durch den ersten und/oder den zweiten Überhitzungsschutz zu schützen und ein zweites elektronisches Bauteil, zum Beispiel die zweite Batterie, durch einen dritten und/oder vierten Überhitzungsschutz zu schützen. Die Anzahl der Überhitzungsschutzeinrichtungen oder -maßnahmen kann zur Anzahl der zu schützenden elektronischen Bauteile korrespondieren.

Weiter kann die mehrlagige Polymerverbundvorrichtung elektronische Bauteile, insbesondere Halbleiterbauteile, aufweisen. Die Bauteile können eine elektronische Schaltung ausbilden. Die Bauteile können auf der Trägerschicht angeordnet sein. Weiter können die Bauteile durch ein Druckverfahren gefertigt sein. Die Trägerschicht kann eine gedruckte Leiterplatte sein. (Auf Englisch: Printed Ciruit Board (PCB))

Zudem kann die Polymerverbundvorrichtung ferner Magnetstreifen, Antennen, Chips, Aktivierungs- oder Betriebszustandsanzeigen und/oder Ladestatusanzeigen der ersten und/oder der zweiten Batterie aufweisen. Die Aktivierungs- oder Betriebszustandsanzeige/n und/oder die Ladestatusanzeige/n können zum Beispiel als, insbesondere mehrfarbige, LED-Anzeigen ausgebildet sein.

In einer Ausführungsform kann die mehrlagige Polymerverbundvorrichtung einen Fingerabdrucksensor aufweisen, welcher dazu ausgebildet und angeordnet ist, einen Fingerabdruck zu erfassen und/oder zu speichern.

Ein Vorteil eines Fingerabdrucksensors besteht darin, dass eine Authentifizierung einer Person ermöglicht wird. Zum Beispiel kann die elektronische Schaltung Informationen über einen Fingerabdruck speichern und mit einem durch den Fingerabdrucksensor ermittelten Fingerabdruck abgleichen. Abhängig vom Abgleichergebnis können weitere Prozesse durch die elektronische Schaltung ausgeführt oder unterbunden werden.

In einer Variante kann die mehrlagige Polymerverbundvorrichtung eine Induktionsspule aufweisen, welche zum Empfang drahtlos übertragener Energie geeignet ist. Die Enden der Induktionsspule können jeweils mit Ladekontakten der ersten und/oder der zweiten wiederaufladbaren Batterie/Akkumulator verbunden sein, sodass ein Wiederaufladen der ersten und/oder der zweiten Batterie/Akkumulator durch eine drahtlose induktive Energieübertragung möglich ist.

Alternativ oder ergänzend kann ein Wiederaufladen der ersten und/oder der zweiten Batterie/Akkumulator durch zwei jeweils mit der Batterie/Akkumulator verbundene Ladekontakte ermöglicht sein, wobei die Ladekontakte so angeordnet sind, dass sie ein Laden der Batterie/des Akkumulators durch eine externe Energiezufuhr ermöglichen. Die Ladekontakte sind hierbei nicht vollständig von der Polymerverbundvorrichtung umschlossen.

Optional kann ein zusätzlicher Kontaktschutz bzw. Stopper aus Polycarbonat einen äußeren freiliegenden Teil der Ladekontakte von der/den thermoplastischen Innenschichteinlage/n isolieren. Der Kontaktschutz bzw. Stopper kann, vorzugsweise für einen Betrachter der Polymerverbundvorrichtung nicht erkennbar, zwischen den Abdeckschichten angeordnet sein.

Ein Vorteil des Kontaktschutzes bzw. Stoppers ist es, dass die freiliegenden äußeren Kontakte thermisch von der/den thermoplastischen Innenschichteinlage/n isoliert werden. Hierdurch kann insbesondere verhindert werden, dass die thermoplastischen Innenschichteinlage/n durch eine von den Ladekontakten während eines Ladens der Batterie/Akkumulator abgegebenen Wärme aufgeschmolzen werden.

Weiter kann der Kontaktschutz bzw. Stopper auch während einer Laminierung den freiliegenden Teil der Ladekontakte schützen, da dieser eine temperaturbeständige Barriere für die, insbesondere während des Laminationsprozesses aufgeschmolzenen, Innenschichtlagen bildet. Einer Verschmutzung und/oder Verdeckung der Ladekontakte durch die aufgeschmolzenen Innenschichtlagen während einer Lamination kann hierdurch verhindert oder zumindest vermindert werden.

In einer Ausführungsform weist die mehrlagige Polymerverbundvorrichtung zumindest einen Schalter ("On-/Off-Button") auf, welcher vorzugsweise von einem insbesondere ringförmigen Distanzelement umgeben ist. In anderen Ausführungsformen kann das Distanzelement auch die Umrisse eines Polygonrahmens aufweisen oder teilweise ringförmig sein. Die Bezeichnungen "ringförmig", "teilweise ringförmig" und "Umrisse eines Polygonrahmens" beziehen sich hierbei auf einen Querschnitt des Distanzelements bzw. auf eine Draufsicht aus der Perspektive eines Betrachters der Polymerverbundvorrichtung. Der Körper des Distanzelements kann im Falle eines "ringförmigen" Distanzelements zum Beispiel auch als Hohlzylinder beschrieben werden. Das Distanzelement kann Fertigungsmaterialien aus der Gruppe der Metalle und/oder der Kunststoffe, insbesondere der Silikone, aufweisen.

Das Distanzelement kann den Schalter in der Richtung von der zweiten Abdeckschicht zur ersten Abdeckschicht oder in der Richtung von der ersten Abdeckschicht zur zweiten Abdeckschicht überragen. Insbesondere kann das Distanzelement dazu geeignet sein, Drucckräfte auf den Schalter während eines Laminierens zu verhindern.

Der zumindest eine Schalter und/oder das Distanzelement können hierbei zwischen der ersten Abdeckschicht und der zweiten Abdeckschicht, insbesondere auf der Trägerschicht angeordnet sein. Sowohl der Schalter als auch das Distanzelement können die erste oder die zweite Abdeckschicht entweder durchdringen/penetrieren oder von der ersten oder zweiten Abdeckschicht verdeckt sein. Ist der Schalter von der ersten oder zweiten Abdeckschicht verdeckt, so überspannt die erste oder die zweite Abdeckschicht den Schalter elastisch.

Der Schalter kann zur haptischen Aktivierung durch einen Bediener ausgebildet sein. Insbesondere kann der Schalter ein von einer Abdeckschicht elastisch überspannter und/oder optisch verborgener Taster sein, der von einem Bediener der Polymerverbundvorrichtung durch physische Druckausübung auf die Polymerverbundvorrichtung im Bereich des Schalters betätigt/aktiviert werden kann. Alternativ kann der Schalter auch ein eine Abdeckschicht durchdringender/penetrierender und/oder optisch erkennbarer Taster sein, der von einem Bediener der Polymerverbundvorrichtung durch physische Druckausübung betätigt/aktiviert werden kann.

Der Schalter kann zu einer Inbetriebnahme und/oder zu einer Beendigung eines Betriebs der elektronischen Schaltung und/oder der Anzeigevorrichtung ausgebildet sein. Alternativ oder Ergänzend kann der Schalter in anderen Ausführungsformen zur Steuerung weiterer Elemente der Polymerverbundvorrichtung dienen.

In einer Weiterentwicklung kann die mehrlagige Polymerverbundvorrichtung eine Mehrzahl von Schaltern zur Steuerung von Vorrichtungselementen der Polymerverbundvorrichtung aufweisen.

In einer Ausführungsform kann die mehrlagige Polymerverbundvorrichtung einen optischen Sensor umfassen, welcher dazu angeordnet und ausgebildet ist, ein optisch erkennbares Zeichen zu erfassen. Der optische Sensor und/oder die elektronische Schaltung können dazu angeordnet und ausgebildet sein, die erfassten optisch erkennbaren Zeichen mit gespeicherten Informationen abzugleichen und/oder elektronisch zu verarbeiten.

Der optische Sensor und/oder die elektronische Schaltung können dazu angeordnet und ausgebildet sein, die erfassten optisch erkennbaren Zeichen und/oder auf Grundlage der erfassten optisch erkennbaren Zeichen ermittelte Informationen an die Anzeigevorrichtung weiterzuleiten.

Optional kann die Polymerverbundvorrichtung zudem einen Lichtsensor aufweisen. Eine Anzeigehelligkeit der Anzeigevorrichtung kann in Abhängigkeit einer von dem Lichtsensor erfassten Umgebungshelligkeit eingestellt werden.

In einer Variante ist der optische Sensor auf der der Anzeigevorrichtung abgewandten Seite der Trägerschicht positioniert. Ebenso können der Lichtsensor und/oder die äußeren freiliegenden Teile der Ladekontakte auf der der Anzeigevorrichtung abgewandten Seite der Trägerschicht positioniert sein.

Ein Verfahren zur Herstellung einer kartenförmigen Polymerverbundvorrichtung umfasst die Schritte:
- Bereitstellen einer ersten thermoplastischen Abdeckschicht aus einem Polymermaterial mit einer ersten Erweichungstemperatur,
- Bereitstellen einer zweiten thermoplastischen Abdeckschicht aus einem Polymermaterial mit einer zweiten Erweichungstemperatur,
- Bereitstellen einer Trägerschicht
- Bereitstellen einer Innenschicht, welche aus zumindest eine erste thermoplastische Innenschichtlage aus einem Polymermaterial mit einer dritten Erweichungstemperatur gebildet ist, wobei die dritte Erweichungstemperatur geringer als die erste Erweichungstemperatur und geringer als die zweite Erweichungstemperatur ist,
- Anordnen der Trägerschicht und der Innenschicht zwischen der ersten Abdeckschicht und der zweiten Abdeckschicht, wobei die Innenschicht die Trägerschicht zumindest teilweise umformt/umgibt/umschließt,
- Anordnen einer ersten Batterie zwischen der ersten Abdeckschicht und der zweiten Abdeckschicht,
- Anordnen eines ersten Überhitzungsschutzes, der ein Polymermaterial enthält, dessen Erweichungstemperatur größer als die dritte Erweichungstemperatur ist, zwischen der ersten Batterie und der ersten Abdeckschicht,
- Ausüben einer Pressenkraft auf zumindest eine der Abdeckschichten, sodass die erste Abdeckschicht und die zweite Abdeckschicht zumindest teilweise in Anlage zur Innenschicht gepresst sind,
- Erhitzen der in Anlage gepressten Schichten bis zu einer Fertigungstemperatur, wobei die Fertigungstemperatur zumindest gleich der dritten Erweichungstemperatur ist und die Fertigungstemperatur kleiner als die erste Erweichungstemperatur ist und die Fertigungstemperatur kleiner als die zweite Erweichungstemperatur ist.

Die Ausführungsreihenfolge der Schritte ist hierbei nicht festgelegt. Insbesondere das Bereitstellen der Schichten kann in einer beliebigen Reihenfolge erfolgen.

Weiter kann das Verfahren zur Herstellung einer Polymerverbundvorrichtung zumindest einen der folgenden Schritte umfassen:
- Anordnen einer Anzeigevorrichtung und/oder einer ersten Batterie zwischen der ersten Abdeckschicht und der zweiten Abdeckschicht, insbesondere auf der Trägerschicht,
- Anordnen eines zweiten Überhitzungsschutzes zwischen der Anzeigevorrichtung und/oder der ersten Batterie und der zweiten Abdeckschicht, insbesondere anliegend an einer der zweiten Abdeckschicht zugewandten Oberfläche der Anzeigevorrichtung und/oder der ersten Batterie,
- Kühlen der Schichten bis zu einer Temperatur, welche geringer als die dritte Erweichungstemperatur ist,
- Lösen der Pressenkraft.

Die Ausführungsreihenfolge der Schritte ist hierbei nicht festgelegt.

Weiter können, den beschriebenen Verfahrensschritten zur Herstellung einer Polymerverbundvorrichtung vorausgehend, elektronische Bauteile, insbesondere Halbleiterbauteile, auf der Trägerschicht, insbesondere durch ein Druckverfahren, angeordnet werden.

Ein Vorteil des Verfahrens besteht neben einer einfachen Prozessführung, insbesondere einer einfachen Temperaturführung, darin, dass die benötigte Erwärmungsdauer insgesamt reduziert werden kann. Insbesondere kann eine bereits unmittelbar an der Abdeckschicht anliegende Innenschicht durch eine Erwärmung erweicht/
verflüssigt werden. Somit erreicht eine extern zugeführte Wärme das zu erweichende/verflüssigende Material bereits, wenn die erste und/oder die zweite Abdeckschicht erwärmt sind.

Bei dem hier beschriebenen Verfahren kann das Erwärmen der in Anlage gepressten Schichten nach einer vorbestimmten Zeitdauer, bevorzugt von 60 Sekunden, besonders bevorzugt von 30 Sekunden, beendet werden.

Ein Vorteil besteht darin, dass durch die verkürzte Erwärmungsdauer temperaturempfindliche Elemente, zum Beispiel die elektronischen Bauteile, geschont werden.

Eine hier ergänzend beschriebene, jedoch nicht zur Erfindung gehörige, Laminationsvorrichtung, welche zur Herstellung einer Polymerverbundvorrichtung geeignet ist, umfasst zumindest eine erste Thermopresse, welche eine erste erhitzbare Pressenplatte und eine zweite erhitzbare Pressenplatte aufweist. Die Pressenplatten sind parallel zueinander ausgerichtet und definieren zusammen/gemeinsam einen Innenraum. Eine erste Laminierplatte liegt, zumindest während der Herstellung der Polymerverbundvorrichtung, an der der zweiten Pressenplatte zugewandten Oberfläche der ersten Pressenplatte an. Eine zweite Laminierplatte liegt, zumindest während der Herstellung der Polymerverbundvorrichtung, an der der ersten Pressenplatte zugewandten Oberfläche der zweiten Pressenplatte an. Weiter liegt eine erste Isolationseinlage an der der zweiten Pressenplatte zugewandten Oberfläche der ersten Laminierplatte an und eine zweite Isolationseinlage liegt an der der ersten Pressenplatte zugewandten Oberfläche der zweiten Laminierplatte an.

Zumindest die erste Pressenplatte ist in einer Richtung hin zur zweiten Pressenplatte presswirksam verlagerbar, sodass die erste Isolationseinlage und die zweite Isolationseinlage mit einem im Innenraum angeordneten Werkstück, insbesondere mit einer Polymerverbundvorrichtung, in Anlage bringbar sind. In einer Weiterentwicklung der Laminationsvorrichtung sind die erste und/oder die zweite Pressenplatte presswirksam verlagerbar. Die erste Laminierplatte ist durch eine Erhitzung/Erwärmung der ersten Pressenplatte erhitzbar/erwärmbar und die zweite Laminierplatte ist durch eine Erhitzung/Erwärmung der zweiten Pressenplatte erhitzbar/erwärmbar. Die erste Isolationseinlage ist durch eine Erhitzung/Erwärmung der ersten Laminierplatte zeitverzögert erhitzbar/erwärmbar und die zweite Isolationseinlage ist durch eine Erhitzung/Erwärmung der zweiten Laminierplatte zeitverzögert erhitzbar/erwärmbar.

Die erste und/oder die zweite Isolationseinlage sind dazu eingerichtet, eine Erhitzung/Erwärmung zeitverzögert weiterzugeben. Nach Ablauf der Zeitverzögerung erfolgt die Wärmeweitergabe an das Werkstück, insbesondere an die Polymerverbundvorrichtung, mit gleichmäßig ansteigender Temperatur.

Ein Vorteil einer solchen Laminationsvorrichtung ist die verbesserte Temperaturführung durch die zeitverzögert erwärmbaren Isolationseinlagen. Durch den unmittelbaren Kontakt der Isolationseinlagen mit dem Werkstück erfolgt die Erwärmung/Erhitzung des Werkstücks unmittelbar analog zur Erwärmung der Isolationseinlage.

Die Isolationseinlagen können insbesondere elastisch bzw. in einem vorbestimmten Bereich nachgiebig ausgebildet sein, um in einem direkten Kontakt mit der zu fertigenden Polymerverbundvorrichtung diese nicht zu verkratzen und/oder zu beschädigen.

In einer Variante der Laminationsvorrichtung kann die erste Thermopresse weiter eine erste Erhitzungsvorrichtung zur Erhitzung der ersten Pressenplatte und/oder eine zweite Erhitzungsvorrichtung zur Erhitzung der zweiten Pressenplatte aufweisen. In einer Weiterbildung kann die erste Thermopresse oder eine zweite Thermopresse eine erste Kühlungsvorrichtung zur Kühlung der ersten Pressenplatte der ersten Thermopresse oder zur Kühlung einer ersten Pressenplatte der zweiten Thermopresse aufweisen und/oder eine zweite Kühlungsvorrichtung zur Kühlung der zweiten Pressenplatte der ersten Thermopresse oder zur Kühlung einer zweiten Pressenplatte der zweiten Thermopresse aufweisen.

In Varianten, in denen die Laminationsvorrichtung eine zweite Thermopresse umfasst, kann die zweite Thermopresse analog zur ersten Thermopresse aufgebaut sein. Insbesondere kann auch die zweite Thermopresse, welche insbesondere eine erste und/oder eine zweite Kühlungsvorrichtung umfasst, eine zur ersten Thermopresse korrespondierende Anordnung von Pressplatten, Laminierplatten und Isolationseinlagen umfassen. Die unmittelbar an der zu fertigenden Polymerverbundvorrichtung anliegenden Isolationseinlagen der zweiten Thermopresse können die Temperaturführung beim Kühlen der Polymerverbundvorrichtung hierbei, analog zur Erwärmung der Polymerverbundvorrichtung durch die erste Thermopresse, verbessern.

Weiter kann die Laminationsvorrichtung eine Transportvorrichtung umfassen, welche dazu ausgebildet und angeordnet ist, ein zu fertigendes Werkstück, oder eine Anordnung aus dem zu fertigenden Werkstück und den Laminierplatten und/oder den Isolationseinlagen, in den Innenraum der Thermopresse zu befördern und/oder ein Werkstück, oder eine Anordnung aus dem zu fertigenden Werkstück und den Laminierplatten und/oder den Isolationseinlagen, aus dem Innenraum der Thermopresse zu befördern.

Die Transportvorrichtung kann dazu ausgebildet und angeordnet sein, ein zu fertigendes Werkstück bzw. eine Anordnung, in einer Förderrichtung zu bewegen, und/oder in einer Absenkrichtung, welche im Wesentlichen orthogonal zur Förderrichtung ist, bewegbar zu sein.

Die Transportvorrichtung kann insbesondere ein Förderband sein, welches in einer Richtung orthogonal zu einer Förderrichtung beweglich/absenkbar ist.

In einer Variante kann die Transportvorrichtung zwei parallele Förderbänder umfassen, welche in hierzu vorgesehene und geeignete Ausnehmungen der ersten und/oder der zweiten Thermopresse absenkbar sind. Die Ausnehmungen sind hierbei an einer Pressenplatte der der ersten und/oder der zweiten Thermopresse angeordnet.

Die Laminationsvorrichtung kann zumindest eine Sensoranordnung umfassen, welche die Position des Werkstücks, insbesondere der Polymerverbundvorrichtung, erfasst. Die Erfassung der Position des Werkstücks kann sowohl innerhalb als auch außerhalb des Innenraums der Thermopresse erfolgen. Im Falle einer Fehlpositionierung des Werkstücks kann ein Fertigungsprozess unterbrochen und/oder die Position eines Werkstücks mithilfe einer Steuerung korrigiert werden.

### Kurzbeschreibung der Figuren

Weitere Merkmale, Eigenschaften, Vorteile und mögliche Abwandlungen werden für einen Fachmann anhand der nachstehenden Beschreibung deutlich, in der auf die beigefügten Zeichnungen Bezug genommen ist. Die Abmessungen und Proportionen der in den Figuren gezeigten Komponenten sind nicht maßstäblich. Die Erfindung ist allein durch die Ansprüche definiert, die nachstehende Beschreibung und die Zeichnungen dienen zum besseren Verständnis derselben.
- Fig. 1: zeigt schematisch eine Polymerverbundvorrichtung mit eingeschlossenen Bauteilen.
- Fig. 2: zeigt schematisch eine Polymerverbundvorrichtung mit eingeschlossenen Bauteilen in einer Laminationsvorrichtung.
- Fig. 3, 4: zeigen schematisch eine Laminationsvorrichtung mit einer Transportvorrichtung.

### Detailbeschreibung der Figuren

Vergleichbare bzw. gleiche und gleichwirkende Komponenten und Merkmale sind in den Figuren jeweils mit denselben Bezugszeichen versehen. Teilweise ist in den Figuren aus Übersichtsgründen auch auf Bezugszeichen einzelner Merkmale und Komponenten verzichtet worden, wobei diese Merkmale und Komponenten in anderen Figuren bereits mit Bezugszeichen versehen sind. Die Komponenten und Merkmale, die in Bezug auf die weiteren Figuren nicht erneut beschrieben sind, ähneln in ihrer Ausbildung und Funktion den entsprechenden Komponenten und Merkmalen gemäß den anderen Figuren.

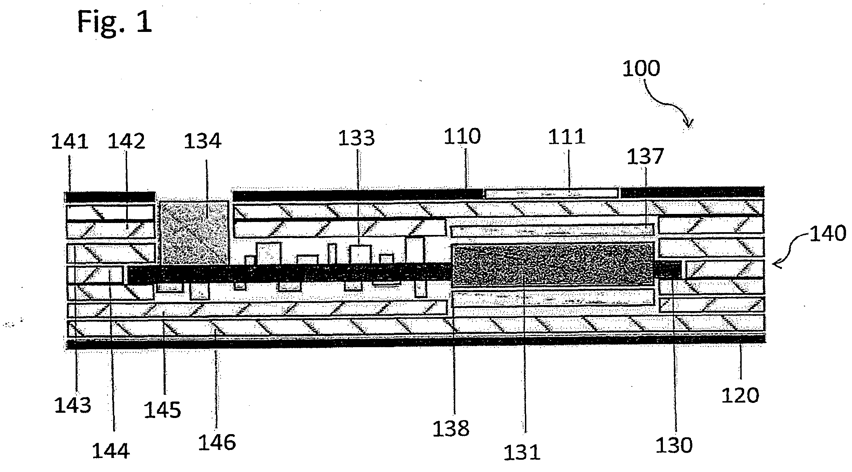

Figur 1 zeigt eine Polymerverbundvorrichtung 100 mit einer ersten Abdeckschicht 110 und mit einer zweiten Abdeckschicht 120. Die erste Abdeckschicht 110 und die zweite Abdeckschicht 120 sind aus einem thermoplastischen Polymermaterial, insbesondere aus Polycarbonat, gefertigt. Im gezeigten Ausführungsbeispiel sind die erste Abdeckschicht 110 und die zweite Abdeckschicht 120 aus dem gleichen thermoplastischen Polymermaterial gefertigt, jedoch ist dies nicht bei allen erfindungsgemäßen Ausführungsformen der Fall.

Die erste Abdeckschicht 110 und die zweite Abdeckschicht 120 bilden die jeweils äußersten Schichten der Polymerverbundvorrichtung 100. Zwischen der ersten Abdeckschicht 110 und der zweiten Abdeckschicht 120 sind eine Trägerschicht 130 und eine Innenschicht 140 angeordnet.

Auf der Trägerschicht 130 ist eine Mehrzahl von elektronischen Bauteilen 133 angeordnet. Weiter sind auf oder an der Trägerschicht 130 ein Fingerabdrucksensor 134, eine erste wiederaufladbare Batterie 131 sowie eine Anzeigevorrichtung angeordnet. Die Anzeigevorrichtung ist dazu angeordnet und ausgebildet, optisch erkennbare Zeichen anzuzeigen. Die Trägerschicht hat, in Verbindung mit den auf bzw. an ihr angeordneten Bauteilen/Komponenten, ein in einem Querschnitt, unebenes Profil mit erhabenen Elementen. In anderen Varianten (nicht gezeigt) kann die Trägerschicht 130 zum Beispiel eine zweite Batterie, einen optischen Sensor, einen Schalter sowie eine Induktionsspule und/oder Anschlusskontakte für die erste und/oder zweite Batterie aufweisen.

Die Innenschicht 140 umfasst in dem in Fig. 1 gezeigten Ausführungsbeispiel sechs Innenschichtlagen 141, 142, 143, 144, 145 und 146. Im gezeigten Ausführungsbeispiel sind die sechs Innenschichtlagen aus dem gleichen thermoplastischen transparenten Polymermaterial gefertigt, jedoch ist dies nicht bei allen erfindungsgemäßen Ausführungsformen der Fall. Die Innenschichtlagen 141, 142, 143, 144, 145 und 146 können zum Beispiel aus einem, insbesondere einheitlichen, PET-, PETG-, ABS- oder PVC-Material bestehen.

Die Innenschicht 140 umgibt die Trägerschicht 130 und die auf oder an ihr angeordneten Bauteile/Komponenten teilweise. Hierzu sind in der ersten, zweiten, dritten, vierten und fünften Innenschichtlage Ausnehmungen angeordnet, welche zur Aufnahme der Trägerschicht und der auf bzw. an der Trägerschicht angeordneten Bauteile/Komponenten geeignet sind. In anderen Ausführungsformen (nicht gezeigt) mit nur wenig erhabenen Bauteilen/Komponenten kann auf die Implementierung von Ausnehmungen in einer oder mehreren Innenschichtlagen vollständig verzichtet werden.

Die erste Abdeckschicht 110 hat einen transparenten und kratzfesten Abschnitt 111, welcher aus der Perspektive eines Betrachters der Polymerverbundvorrichtung 100 über der Anzeigevorrichtung angeordnet ist. Der transparente Abschnitt 111 ist ebenfalls aus einem thermoplastischen Polymermaterial/Polycarbonat gefertigt. In der hier gezeigten Ausführungsform ist der Abschnitt 111 ein separates Folienstück aus Polymermaterial, welches in die erste Abdeckschicht 110 eingesetzt ist. Dies ist jedoch nicht bei allen Ausführungsformen der Fall. Weiter hat die erste Abdeckschicht 110 im Bereich des Fingerabdrucksensors 134 eine Ausnehmung, sodass der Fingerabdrucksensor 134 nicht von der ersten Abdeckschicht 110 überdeckt ist.

Der gezeigte Fingerabdrucksensor 134 ist dazu geeignet den Fingerabdruck eines Bedieners zu erfassen und zu speichern. Der Fingerabdrucksensor 134 wird, ebenso wie die elektronischen Bauteile 133, von der ersten Batterie 131 mit elektrischer Energie versorgt.

Die erste thermoplastische Abdeckschicht 110 mit dem transparenten Abschnitt 111 hat eine Erweichungstemperatur T1. Die zweite Abdeckschicht 120 hat eine Erweichungstemperatur T2. Im gezeigten Ausführungsbeispiel sind die Erweichungstemperaturen T1 und T2 identisch, jedoch ist dies nicht in allen erfindungsgemäßen Ausführungsformen der Fall.

Die Innenschicht 140, welche die sechs Innenschichtlagen 141, 142, 143, 144, 145, 146 umfasst, hat eine einheitliche Erweichungstemperatur T3. In anderen Ausführungsformen kann die Innenschicht eine Mehrzahl von Innenschichtlagen umfassen, wobei die einzelnen Innenschichtlagen voneinander verschiedene Erweichungstemperaturen haben können.

Die Erweichungstemperatur T3 ist geringer als die Erweichungstemperatur T1 bzw. T2.

Zum Beispiel kann die Erweichungstemperatur T3 einen Wert von 140 Grad Celsius haben. Die Erweichungstemperaturen T1 und T2 können zum Beispiel jeweils einen Wert zwischen 160 und 220 Grad Celsius haben.

Wird die Polymerverbundvorrichtung 100 über die Erweichungstemperatur T3 hinaus erwärmt, so erweicht oder verflüssigt sich die Innenschicht 140, wobei die erste und die zweite Abdeckschicht 110, 120 zumindest bis zu einer Erwärmung der Polymerverbundvorrichtung 100 bis zur Temperatur T1 bzw. T2, formstabil bleiben. Hierdurch wird der Erhalt einer ebenen Oberfläche der Polymerverbundvorrichtung 100, auch während einer Erwärmung der Polymerverbundvorrichtung 100 über die Erweichungstemperatur T3 hinaus, bewirkt.

Wird neben der Erwärmung der Polymerverbundvorrichtung 100 eine Pressenkraft auf die erste und/oder die zweite Abdeckschicht 110, 120 ausgeübt, so umformt/umfließt/umschließt die Innenschicht 140 die Trägerschicht 130 und die auf oder an ihr angeordneten Elemente materialschlüssig, sodass keine Hohlräume im Innern der Polymerverbundvorrichtung 100 verbleiben.

Die in Figur 1 gezeigte Ausführungsform der Polymerverbundvorrichtung 100 weist zudem einen ersten Überhitzungsschutz 137 und einen zweiten Überhitzungsschutz 138 auf, welche aus einem transparenten Polymermaterial gefertigt sind. Die Erweichungstemperaturen des ersten und des zweiten Überhitzungsschutzes 137, 138 sind höher als die Temperatur T3. Während der Erwärmung der Polymerverbundvorrichtung 100 über die Erweichungstemperatur T3 hinaus verbleibt sowohl der erste als auch der zweite Überhitzungsschutz 137, 138 formstabil. Der erste Überhitzungsschutz 137 ist auf der der ersten Abdeckschicht 110 zugewandten Oberfläche der ersten Batterie 131 sowie der Anzeigevorrichtung angeordnet. Der zweite Überhitzungsschutz 138 ist auf der der zweiten Abdeckschicht 120 zugewandten Oberfläche der ersten Batterie 131 sowie der Anzeigevorrichtung angeordnet.

Während der Erwärmung der Polymerverbundvorrichtung 100 schützen der erste Überhitzungsschutz 137 und der zweite Überhitzungsschutz 138 temperaturempfindliche elektronische Komponenten der Polymerverbundvorrichtung 100, indem sie einen Teil der zugeführten Wärme absorbieren und eine Erwärmung der Komponenten verzögern.

Ein Vorteil der Polymerverbundvorrichtung 100 ist, dass kein zusätzliches Füll- oder Klebstoffmaterial in die Polymerverbundvorrichtung eingebracht werden muss, um die im Querschnitt unebene Trägerschicht zu fixieren. Hierdurch wird eine Temperaturführung während der Fertigung erheblich vereinfacht, sodass auch die gesamte Dauer der Fertigung reduziert werden kann. Hierdurch werden insbesondere temperatur- und/oder druckempfindliche elektronische Bauteile geschont. Die den beiden Abdeckschichten nächstliegenden temperaturempfindlichen Bauteile werden durch die Verwendung eines Überhitzungsschutzes zusätzlich geschützt.

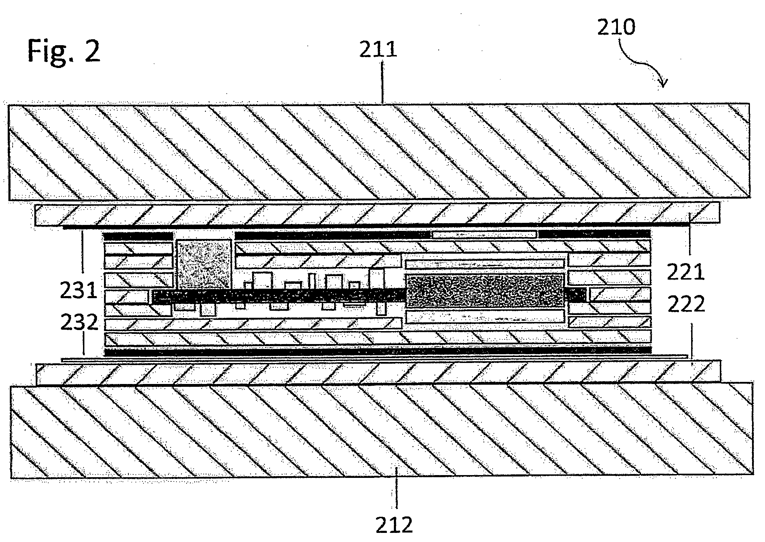

Figur 2 zeigt schematisch eine Thermopresse 210, welche dazu geeignet ist eine Polymerverbundvorrichtung 100 zu erwärmen und eine Pressenkraft auf diese auszuüben. Die Thermopresse 210 umfasst eine erste Pressenplatte 211 und eine zweite Pressenplatte 212.

Die erste Pressenplatte 211 und die zweite Pressenplatte 212 sind parallel zueinander ausgerichtet und definieren gemeinsam einen Innenraum. Eine erste Laminierplatte 221 liegt an der der zweiten Pressenplatte 212 zugewandten Oberfläche der ersten Pressenplatte 211 an. Eine zweite Laminierplatte 222 liegt an der der ersten Pressenplatte 211 zugewandten Oberfläche der zweiten Pressenplatte 212 an.

In dem in Figur 2 gezeigten Ausführungsbeispiel liegt an der der zweiten Pressenplatte 212 zugewandten Oberfläche der ersten Laminierplatte 221 eine Isolationseinlage in Form einer ersten Teflonfolie 231 an. An der der ersten Pressenplatte 211 zugewandten Oberfläche der zweiten Laminierplatte 222 liegt eine Isolationseinlage in Form einer zweiten Teflonfolie 232 an.

Die Isolationseinlagen befördern eine gleichmäßige Wärmeübertragung an die zu erwärmende Polymerverbundvorrichtung tragen somit zum Erhalt der ebenen Oberflächen der Polymerverbundvorrichtung während des Ausübens der Pressenkraft bei.

Die zu fertigende Polymerverbundvorrichtung 100 ist zwischen der ersten und der zweiten Teflonfolie 231, 232 angeordnet.

Im in Figur 2 gezeigten Ausführungsbeispiel ist die erste Pressenplatte 211 dazu angeordneten und ausgebildet, durch eine presswirksame Verlagerung in Richtung der zweiten Pressenplatte 212 eine Pressenkraft auf die Polymerverbundvorrichtung 100 auszuüben.

Sowohl die erste als auch die zweite Pressenplatte 211, 212 sind dazu ausgebildet und angeordnet, durch eine Erhitzungsvorrichtung (nicht gezeigt) erwärmt/erhitzt zu werden. Die den Pressenplatten 211, 212 zugeführte Wärme wird zunächst an die Laminierplatten 221, 222 übertragen. Die Laminierplatten 221, 222 erwärmen jeweils die erste bzw. die zweite Teflonfolie 222, 232, wobei die Teflonfolien die Weitergabe der Wärme an die in der Thermopresse angeordnete Polymerverbundvorrichtung 100 verzögern. Nach dem Ablauf der Verzögerung erfolgt die Wärmeweitergabe an die Polymerverbundvorrichtung 100 mit gleichmäßig ansteigender Temperatur.

Die Thermopresse 210 ist dazu ausgebildet und angeordnet, die Polymerverbundvorrichtung 100 bis zu einer Fertigungstemperatur TF zu erwärmen, wobei die Fertigungstemperatur TF größer als die Erweichungstemperatur T3 und geringer als die Erweichungstemperatur T1 bzw. T2 ist. Die Thermopresse 210 ist dazu ausgebildet und angeordnet, gleichzeitig zur Erwärmung der Polymerverbundvorrichtung 100 eine Pressenkraft auf die Polymerverbundvorrichtung 100 auszuüben.

Weiter ist die Thermopresse 210 dazu ausgebildet und angeordnet, dass Erwärmen der in Anlage gepressten Schichten nach einer vorbestimmten Zeitdauer, bevorzugt von 60 Sekunden, besonders bevorzugt von 30 Sekunden, zu beenden.

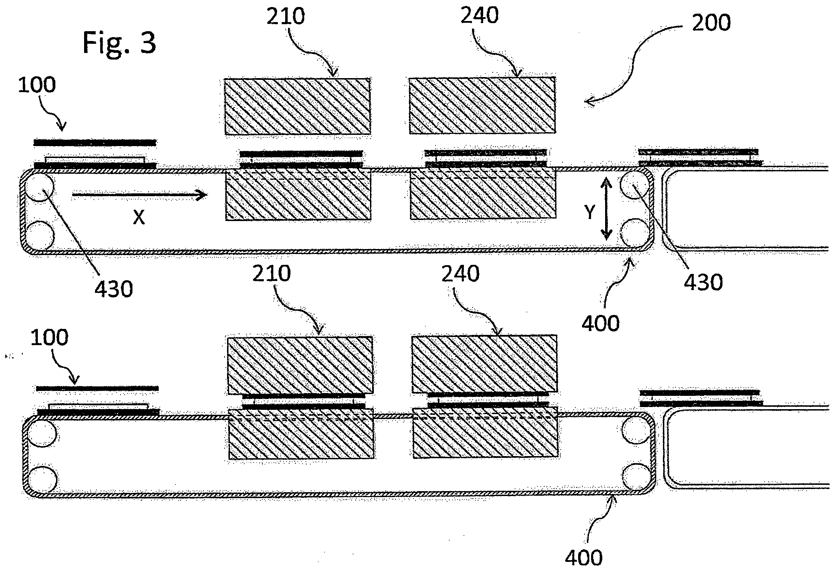

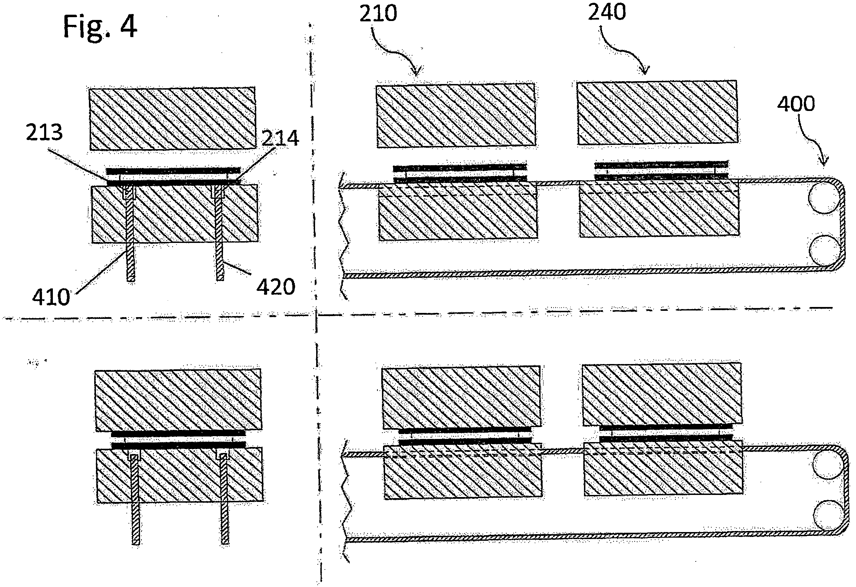

Figur 3 und Figur 4 zeigen eine Laminationsvorrichtung 200, welche eine erste Thermopresse 210 und eine zweite Thermopresse 240 sowie eine Transportvorrichtung 400 umfasst. Die zweite Thermopresse 240 korrespondiert in Ihrem Aufbau zu der in Figur 2 gezeigten Thermopresse 210. Weiter ist die zweite Thermopresse 240 dazu angeordneten und ausgebildet, eine Polymerverbundvorrichtung 100 mittels einer Kühlungsvorrichtung (nicht gezeigt) zu kühlen und gleichzeitig eine Pressenkraft auf die Polymerverbundvorrichtung 100 auszuüben.

Optional kann während des Erwärmens und/oder des Kühlens der Polymerverbundvorrichtung ein Vakuum im Bereich der ersten und/oder zweiten Thermopresse, insbesondere im Innenraum der ersten und/oder zweiten Thermopresse, erzeugt werden.

Eine Transportvorrichtung 400 befördert eine Mehrzahl von Polymerverbundvorrichtungen sukzessive in die Innenräume der Thermopressen 210, 240 bzw. aus den Innenräumen der Thermopressen hinaus. Die Polymerverbundvorrichtungen sind hierbei jeweils in einer Anordnung aus zwei Laminierplatten und zwei Teflonfolien. Die Anordnungen korrespondieren jeweils zu der in Figur 1 gezeigten Anordnung.

Die Transportvorrichtung 400 umfasst zwei, insbesondere voneinander unabhängig bewegliche, Umlaufbänder 410, 420, welche dazu geeignet sind, die Polymerverbundvorrichtung bzw. die Anordnungen entlang einer Förderrichtung X zu bewegen. Die Umlaufbänder 410, 420 sind über die Antriebsrollen 430 geführt. Die Umlaufbänder 410, 420 sind dazu ausgebildet und angeordnet, vor oder während der presswirksamen Verlagerung der jeweils ersten Pressenplatten der Thermopressen 210, 240 in hierzu vorgesehene Vertiefungen 213, 214 abzusinken.

Mit anderen Worten sind die Umlaufbänder 410, 420 in einer Richtung Y, welche im Wesentlichen orthogonal zur Förderrichtung X verläuft, beweglich. Die Umlaufbänder 410, 420 sind in die Vertiefungen 213, 214 der Thermopressen 210, 240 hinein positionierbar.

Werden die Umlaufbänder 410, 420 abgesenkt, so verlieren die geförderten Anordnungen, in denen die zu fertigenden Polymerverbundvorrichtungen aufgenommen sind, den unmittelbaren Kontakt zu den Umlaufbändern und liegen an einer Oberfläche der jeweiligen Thermopresse an. Weiter sind die Umlaufbänder 410, 420 dazu ausgebildet und angeordnet, nach dem Lösen einer Pressenkraft aus den Vertiefungen 213, 214 heraus bewegt zu werden, sodass ein Kontakt zwischen den Umlaufbändern und den Polymerverbundvorrichtungen wiederhergestellt wird und die sukzessive Förderung in der Förderrichtung X fortgesetzt werden kann.

Das Absenken der Umlaufbänder 410, 420 kann zum Beispiel durch ein Absenken der Antriebsrollen 430 herbeigeführt werden.

In einer Weiterentwicklung (nicht gezeigt) können die erste und/oder die zweite Thermopresse jeweils eine eigene Transportvorrichtung aufweisen, welche jeweils über einen eigenen Antrieb verfügt. Die Transportvorrichtungen können in einem Übergabebereich ineinandergreifen. Insbesondere können jeweils parallele Umlaufbänder der Transportvorrichtungen jeweils zueinander unterschiedliche Abstände aufweisen, sodass ein Ineinandergreifen der Transportvorrichtungen ermöglicht wird. Ein voneinander unabhängiger Betrieb der Transportvorrichtungen ist möglich.

## Patentansprüche

1. Kartenförmige Polymerverbundvorrichtung (100), umfassend
eine erste thermoplastische Abdeckschicht (110) aus einem Polymermaterial mit einer ersten Erweichungstemperatur (T1),
eine zweite thermoplastische Abdeckschicht (120) aus einem Polymermaterial mit einer zweiten Erweichungstemperatur (T2),
eine Trägerschicht (130), welche zwischen der ersten Abdeckschicht (110) und der zweiten Abdeckschicht (120) angeordnet ist,
eine Innenschicht (140), welche aus zumindest einer ersten thermoplastischen Innenschichtlage (141) aus einem Polymermaterial mit einer dritten Erweichungstemperatur (T3) gebildet ist und zwischen der ersten Abdeckschicht (110) und der zweiten Abdeckschicht (120) angeordnet ist,
eine erste Batterie (131), welche zwischen der ersten Abdeckschicht (110) und der zweiten Abdeckschicht (120) angeordnet ist,
einen ersten Überhitzungsschutz (137), der ein Polymermaterial enthält, dessen Erweichungstemperatur größer als die dritte Erweichungstemperatur (T3) ist, wobei
die Innenschicht (140) die Trägerschicht (130) zumindest teilweise materialschlüssig umgibt,
die dritte Erweichungstemperatur (T3) geringer als die erste Erweichungstemperatur (T1) und geringer als die zweite Erweichungstemperatur (T2) ist,
wobei die erste Abdeckschicht (110) und die zweite Abdeckschicht (120) in Anlage zur Innenschicht (140) angeordnet sind, und
der erste Überhitzungsschutz (137) zwischen der ersten Batterie (131) und der ersten Abdeckschicht (110), angeordnet ist.

2. Polymerverbundvorrichtung (100) nach Anspruch **1,** weiter umfassend zumindest eine Anzeigevorrichtung, wobei
die zumindest eine Anzeigevorrichtung zwischen der ersten Abdeckschicht (110) und der zweiten Abdeckschicht (120), insbesondere auf der Trägerschicht (130), angeordnet ist,
die erste Abdeckschicht (110) und/oder die zweite Abdeckschicht (120), insbesondere im Bereich der Anzeigevorrichtung, zumindest einen teilweise transparenten Abschnitt aufweisen, sodass zumindest ein Teil der zumindest einen Anzeigevorrichtung für einen Betrachter und/oder ein elektronisches Auslesegerät optisch erkennbar/auslesbar ist, und/oder
zumindest eine thermoplastische Innenschichtlage (141) zumindest im Bereich der Anzeigevorrichtung zumindest teilweise transparent ist.

3. Polymerverbundvorrichtung (100) nach einem der vorangegangen Ansprüche, weiter umfassend
einen zweiten Überhitzungsschutz (138), welcher insbesondere ein Polymermaterial aufweist, dessen Erweichungstemperatur größer als die dritte Erweichungstemperatur (T3) ist, wobei
der zweite Überhitzungsschutz (138) zwischen der Anzeigevorrichtung und/oder der ersten Batterie (131) und der zweiten Abdeckschicht (120), insbesondere anliegend an einer der zweiten Abdeckschicht (120) zugewandten Oberfläche der Anzeigevorrichtung und/oder der ersten Batterie (131), angeordnet ist.

4. Polymerverbundvorrichtung (100) nach einem der vorangegangen Ansprüche, wobei die Innenschicht (140) weiter
eine zweite thermoplastische, insbesondere transparente, Innenschichtlage (142) aufweist, wobei die Erweichungstemperatur der zweiten thermoplastischen Innenschichtlage (142) gleich oder geringer als die dritte Erweichungstemperatur (T3) ist, und/oder
eine dritte thermoplastische, insbesondere transparente, Innenschichtlage (143) aufweist, wobei die Erweichungstemperatur der dritten thermoplastischen Innenschichtlage (143) gleich oder geringer als die dritte Erweichungstemperatur (T3) ist, und/oder
eine vierte thermoplastische, insbesondere transparente, Innenschichtlage (144) aufweist, wobei die Erweichungstemperatur der vierten thermoplastischen Innenschichtlage (144) gleich oder geringer als die dritte Erweichungstemperatur (T3) ist, und/oder
eine fünfte thermoplastische, insbesondere transparente, Innenschichtlage (145) aufweist, wobei die Erweichungstemperatur der fünften thermoplastischen Innenschichtlage (145) gleich oder geringer als die dritte Erweichungstemperatur (T3) ist, und/oder
eine sechste thermoplastische, insbesondere transparente, Innenschichtlage (146) aufweist, wobei die Erweichungstemperatur der sechsten thermoplastischen Innenschichtlage (146) gleich oder geringer als die dritte Erweichungstemperatur (T3) ist.

5. Polymerverbundvorrichtung (100) nach einem der Ansprüche 3 oder 4, weiter umfassend
eine zweite, insbesondere wiederaufladbare Batterie (132), und/oder
insbesondere auf der Trägerschicht (130) angeordnete elektronische Bauteile (133), insbesondere Halbleiterbauteile, welche eine elektronische Schaltung ausbilden, und/oder
zumindest einen Fingerabdrucksensor (134), welcher dazu angeordnet und ausgebildet ist, einen Fingerabdruck zu erfassen und/oder zu speichern, und/oder
zumindest eine Induktionsspule, welche mit der ersten und/oder der zweiten Batterie elektrisch leitend verbunden ist, und/oder
zumindest zwei Anschlusskontakte, welche mit der ersten und/oder der zweiten Batterie elektrisch leitend verbunden sind, wobei
die erste und/oder zweite Batterie durch einen elektrischen Strom aufgeladen werden können, welcher durch das Anlegen einer Spannung an die Anschlusskontakte und/oder durch eine induktive Energieübertragung an die Induktionsspule hervorgerufen wird.

6. Polymerverbundvorrichtung (100) nach einem der vorangegangen Ansprüche, weiter umfassend
zumindest einen Schalter, welcher vorzugsweise von einem insbesondere ringförmigen Distanzelement umgeben ist, wobei
der zumindest eine Schalter und/oder das Distanzelement zwischen der ersten Abdeckschicht (110) und der zweiten Abdeckschicht (120), insbesondere auf der Trägerschicht (130), angeordnet sind, und/oder
der Schalter zu einer Inbetriebnahme und/oder zu einer Beendigung eines Betriebs der elektronischen Schaltung und/oder der Anzeigevorrichtung ausgebildet ist, und/oder
das Distanzelement den Schalter in der Richtung von der zweiten Abdeckschicht (120) zur ersten Abdeckschicht (110) oder in der Richtung von der ersten Abdeckschicht (110) zur zweiten Abdeckschicht (120) überragt.

7. Polymerverbundvorrichtung (100) nach einem der vorangegangen Ansprüche, weiter umfassend
einen optischen Sensor, welcher dazu angeordnet und ausgebildet ist ein optisch erkennbares Zeichen, insbesondere einen QR-Code, zu erfassen, wobei
der optische Sensor und/oder die elektronische Schaltung dazu angeordnet und ausgebildet sind, die erfassten optisch erkennbaren Zeichen mit gespeicherten Informationen zu vergleichen und/oder elektronisch zu verarbeiten, und/oder
der optische Sensor und/oder die elektronische Schaltung dazu angeordnet und ausgebildet sind, die erfassten optisch erkennbaren Zeichen und/oder auf Grundlage der erfassten optisch erkennbaren Zeichen ermittelte Informationen an die Anzeigevorrichtung weiterzuleiten, und/oder
der optische Sensor auf der der Anzeigevorrichtung abgewandten Seite der Trägerschicht (130) positioniert ist.

8. Verfahren zur Herstellung einer kartenförmigen Polymerverbundvorrichtung (100), umfassend die Schritte:
- Bereitstellen einer ersten thermoplastischen Abdeckschicht (110) aus einem Polymermaterial mit einer ersten Erweichungstemperatur (T1),
- Bereitstellen einer zweiten thermoplastischen Abdeckschicht (120) aus einem Polymermaterial mit einer zweiten Erweichungstemperatur (T2),
- Bereitstellen einer Trägerschicht (130)
- Bereitstellen einer Innenschicht (140), welche aus zumindest einer ersten thermoplastischen Innenschichtlage (141) aus einem Polymermaterial mit einer dritten Erweichungstemperatur (T3) gebildet ist, wobei die dritte Erweichungstemperatur (T3) geringer als die erste Erweichungstemperatur (T1) und geringer als die zweite Erweichungstemperatur (T2) ist,
- Anordnen der Trägerschicht (130) und der Innenschicht (140) zwischen der ersten Abdeckschicht (110) und der zweiten Abdeckschicht (120), wobei die Innenschicht (140) die Trägerschicht (130) zumindest teilweise umgibt,
- Anordnen einer ersten Batterie (131) zwischen der ersten Abdeckschicht (110) und der zweiten Abdeckschicht (120),
- Anordnen eines ersten Überhitzungsschutzes (137), der ein Polymermaterial enthält, dessen Erweichungstemperatur größer als die dritte Erweichungstemperatur (T3) ist, zwischen der ersten Batterie (131) und der ersten Abdeckschicht (110),
- Ausüben einer Pressenkraft auf zumindest eine der Abdeckschichten (120, 130), sodass die erste Abdeckschicht (110) und die zweite Abdeckschicht (120) zumindest teilweise in Anlage zur Innenschicht (140) gepresst sind,
- Erhitzen der in Anlage gepressten Schichten (110, 120, 130) bis zu einer Fertigungstemperatur (TF), wobei
die Fertigungstemperatur (TF) zumindest gleich der dritten Erweichungstemperatur (T3) ist,
die Fertigungstemperatur (TF) kleiner als die erste Erweichungstemperatur (T1) ist, und
die Fertigungstemperatur (TF) kleiner als die zweite Erweichungstemperatur (T2) ist.

9. Verfahren zur Herstellung einer Polymerverbundvorrichtung (100) nach Anspruch 8, weiter umfassend zumindest einen der Schritte:
- Anordnen einer Anzeigevorrichtung zwischen der ersten Abdeckschicht (110) und der zweiten Abdeckschicht (120), insbesondere auf der Trägerschicht (130),
- Anordnen eines zweiten Überhitzungsschutzes (138) zwischen der Anzeigevorrichtung und/oder der ersten Batterie (131) und der zweiten Abdeckschicht (120), insbesondere anliegend an einer der zweiten Abdeckschicht (120) zugewandten Oberfläche der Anzeigevorrichtung und/oder der ersten Batterie (131),
- Kühlen der Schichten (110, 120, 130) bis zu einer Temperatur, welche kleiner als die dritte Erweichungstemperatur (T3) ist,
- Lösen der Pressenkraft.

10. Verfahren zur Herstellung einer Polymerverbundvorrichtung (100) nach Anspruch 8 oder 9, wobei
den Verfahrensschritten vorausgehend elektronische Bauteile, insbesondere Halbleiterbauteile, auf der Trägerschicht, insbesondere durch ein Druckverfahren, angeordnet werden.

11. Verfahren zur Herstellung einer Polymerverbundvorrichtung (100) nach einem der Ansprüche 8 bis 10, wobei
wobei das Erwärmen der in Anlage gepressten Schichten nach einer vorbestimmten Zeitdauer, bevorzugt von 60 Sekunden, besonders bevorzugt von 30 Sekunden, beendet wird.

## Claims

1. A polymer composite device in card form (100) comprising
a first thermoplastic covering layer (110) of a polymer material with a first softening temperature (T1),
a second thermoplastic covering layer (120) of a polymer material with a second softening temperature (T2),
a carrier layer (130) which is arranged between the first covering layer (110) and the second covering layer (120),
an inner layer (140) which is formed of at least a first thermoplastic inner layer (141) made of a polymer material with a third softening temperature (T3) and arranged between the first covering layer (110) and the second covering layer (120),
a first battery (131) arranged between the first covering layer (110) and the second covering layer (120),
a first overheat protection (137) containing a polymer material whose softening temperature is higher than the third softening temperature (T3), wherein
the inner layer (140) at least partially surrounds the carrier layer (130) in a material-bonding manner,
the third softening temperature (T3) is lower than the first softening temperature (T1) and lower than the second softening temperature (T2), wherein the first covering layer (110) and the second covering layer (120) are arranged in contact with the inner layer (140), and
the first overheat protection (137) is arranged between the first battery (131) and the first covering layer (110).

2. The polymer composite device (100) according to claim 1, further comprising at least one display device, wherein
the at least one display device is arranged between the first covering layer (110) and the second covering layer (120), in particular on the carrier layer (130),
the first covering layer (110) and/or the second covering layer (120) include, in particular in the region of the display device, at least one partially transparent section, so that at least part of the at least one display device is optically recognizable/readable for an observer and/or an electronic reader, and/or
at least one thermoplastic inner layer (141) is at least partially transparent at least in the area of the display device.

3. The polymer composite device (100) according to one of the preceding claims, further comprising
a second overheat protection device (138), which in particular comprises a polymer material whose softening temperature is higher than the third softening temperature (T3), wherein
the second overheat protection device (138) is arranged between the display device and/or the first battery (131) and the second covering layer (120), in particular lying against a surface of the display device and/or the first battery (131) facing the second covering layer (120).

4. The polymer composite device (100) according to one of the preceding claims, wherein the inner layer (140) further comprising
a second thermoplastic, in particular transparent, inner layer (142), wherein the softening temperature of the second thermoplastic inner layer (142) is the same as or lower than the third softening temperature (T3), and/or
a third thermoplastic, in particular transparent, inner layer (143), wherein the softening temperature of the third thermoplastic inner layer (143) is the same as or lower than the third softening temperature (T3), and/or
a fourth thermoplastic, in particular transparent, inner layer (144), wherein the softening temperature of the fourth thermoplastic inner layer (144) is the same as or lower than the third softening temperature (T3), and/or
a fifth thermoplastic, in particular transparent, inner layer (145), wherein the softening temperature of the fifth thermoplastic inner layer (145) is the same as or lower than the third softening temperature (T3), and/or
a sixth thermoplastic, in particular transparent, inner layer (146), wherein the softening temperature of the sixth thermoplastic inner layer (146) is the same as or lower than the third softening temperature (T3).

5. The polymer composite device (100) according to one of claims 3 or 4, further comprising
a second, in particular rechargeable, battery (132), and/or
electronic components (133), in particular semiconductor components, arranged in particular on the carrier layer (130), which form an electronic circuit, and/or
at least one fingerprint sensor (134) which is arranged and configured to detect and/or store a fingerprint, and/or
at least one induction coil, which is electrically conductively connected to the first and/or the second battery, and/or
at least two connection contacts which are electrically conductively connected to the first and/or second battery, wherein
the first and/or second battery can be charged by an electric current which is brought about by applying a voltage to the connection contacts and/or by inductive energy transfer to the induction coil.

6. The polymer composite device (100) according to one of the preceding claims, further comprising
at least one switch, which is preferably surrounded by an in particular annular spacer element, wherein
the at least one switch and/or the spacer element are arranged between the first covering layer (110) and the second covering layer (120), in particular on the carrier layer (130), and/or
the switch is configured for starting and/or ending operation of the electronic circuit and/or of the display device, and/or
the spacer element protrudes beyond the switch in the direction from the second covering layer (120) to the first covering layer (110) or in the direction from the first covering layer (110) to the second covering layer (120).

7. The polymer composite device (100) according to one of the preceding claims, further comprising
an optical sensor which is arranged and configured to detect an optically recognizable symbol, in particular a QR code, wherein
the optical sensor and/or the electronic circuit are arranged and designed to compare the detected optically recognizable symbols with stored information and/or to process them electronically, and/or
the optical sensor and/or the electronic circuit are arranged and configured to transmit the detected optically recognizable symbols and/or information determined on the basis of the detected optically recognizable symbols to the display device, and/or
the optical sensor is positioned on the side of the carrier layer (130) that faces away from the display device.

8. A method for producing a polymer composite device in card form (100), comprising the steps of:
- providing a first thermoplastic covering layer (110) made of a polymer material with a first softening temperature (T1),
- providing a second thermoplastic covering layer (120) of a polymer material with a second softening temperature (T2),
- providing a carrier layer (130)
- providing an inner layer (140) formed of at least a first thermoplastic inner layer (141) of a polymer material with a third softening temperature (T3), wherein the third softening temperature (T3) is lower than the first softening temperature (T1) and lower than the second softening temperature (T2),
- arranging the carrier layer (130) and the inner layer (140) between the first covering layer (110) and the second covering layer (120), wherein the inner layer (140) at least partially surrounds the carrier layer (130),
- arranging a first battery (131) between the first covering layer (110) and the second covering layer (120),
- arranging a first overheat protection (137), which contains a polymer material whose softening temperature is greater than the third softening temperature (T3), between the first battery (131) and the first covering layer (110),
- exerting a pressing force on at least one of the covering layers (120, 130) so that the first covering layer (110) and the second covering layer (120) are pressed at least partially into contact with the inner layer (140),
- heating the layers pressed into contact (110, 120, 130) to a manufacturing temperature (TF), wherein
the manufacturing temperature (TF) is at least equal to the third softening temperature (T3),
the manufacturing temperature (TF) is lower than the first softening temperature (T1), and
the manufacturing temperature (TF) is lower than the second softening temperature (T2).

9. The method for producing a polymer composite device (100) according to claim 8, further comprising at least one of the steps:
- arranging a display device between the first covering layer (110) and the second covering layer (120), in particular on the carrier layer (130),
- placing a second overheat protection (138) between the display device and/or the first battery (131) and the second covering layer (120), in particular lying against a surface of the display device and/or the first battery (131) facing the second covering layer (120),
- cooling the layers (110, 120, 130) to a temperature which is lower than the third softening temperature (T3),
- releasing the pressing force.

10. The method for producing a polymer composite device (100) according to claim 8 or 9, wherein
prior to the method steps, electronic components, in particular semiconductor components, are arranged on the carrier layer, in particular by a printing process.

11. Method for producing a polymer composite device (100) according to one of claims 8 to 10, wherein
heating of the layers pressed into contact is ended after a predetermined period of time, preferably 60 seconds, particularly preferably 30 seconds.

## Revendications

1. Un dispositif composite polymère en forme de carte (100) comprenant
une première couche de revêtement thermoplastique (110) constituée d'un matériau polymère ayant une première température de ramollissement (T1),
une deuxième couche de revêtement thermoplastique (120) constituée d'un matériau polymère ayant une deuxième température de ramollissement (T2),
une couche de support (130) disposée entre la première couche de revêtement (110) et la deuxième couche de revêtement (120),
une couche interne (140) formée d'au moins une première couche interne thermoplastique (141) en un matériau polymère ayant une troisième température de ramollissement (T3) et disposée entre la première couche de recouvrement (110) et la deuxième couche de recouvrement (120),
une première batterie (131) disposée entre la première couche de recouvrement (110) et la deuxième couche de recouvrement (120),
une première protection contre la surchauffe (137) contenant un matériau polymère dont la température de ramollissement est supérieure à la troisième température de ramollissement (T3),
la couche interne (140) entoure au moins partiellement la couche de support (130) par liaison matérielle,
la troisième température de ramollissement (T3) est inférieure à la première température de ramollissement (T1) et inférieure à la deuxième température de ramollissement (T2),
la première couche de recouvrement (110) et la deuxième couche de recouvrement (120) étant disposées en appui contre la couche interne (140), et
la première protection contre la surchauffe (137) est disposée entre la première batterie (131) et la première couche de recouvrement (110).

2. Le dispositif composite polymère (100) selon la revendication 1, comprenant en outre
au moins un dispositif d'affichage,
ledit au moins un dispositif d'affichage est disposé entre la première couche de recouvrement (110) et la deuxième couche de recouvrement (120), en particulier sur la couche de support (130),
la première couche de recouvrement (110) et/ou la deuxième couche de recouvrement (120), en particulier dans la zone du dispositif d'affichage, comportent au moins une partie partiellement transparente, de sorte qu'au moins une partie du dispositif d'affichage au moins soit optiquement reconnaissable/lisible pour un observateur et/ou un appareil de lecture électronique, et/ou
au moins une couche thermoplastique interne (141) est au moins partiellement transparente au moins dans la zone du dispositif d'affichage.

3. Le dispositif composite polymère (100) selon l'une des revendications précédentes, comprenant en outre
une deuxième protection contre la surchauffe (138) qui comprend en particulier un matériau polymère dont la température de ramollissement est supérieure à la troisième température de ramollissement (T3),
la deuxième protection contre la surchauffe (138) est disposée entre le dispositif d'affichage et/ou la première batterie (131) et la deuxième couche de recouvrement (120), en particulier adjacente à une surface du dispositif d'affichage et/ou de la première batterie (131) tournée vers la deuxième couche de recouvrement (120).

4. Le dispositif composite polymère (100) selon l'une des revendications précédentes, la couche interne (140) comportant en outre
une deuxième couche interne thermoplastique, en particulier transparente (142), la température de ramollissement de la deuxième couche interne thermoplastique (142) étant égale ou inférieure à la troisième température de ramollissement (T3), et/ou
une troisième couche interne thermoplastique, en particulier transparente (143), la température de ramollissement de la troisième couche interne thermoplastique (143) étant égale ou inférieure à la troisième température de ramollissement (T3), et/ou
une quatrième couche interne thermoplastique, en particulier transparente (144), la température de ramollissement de la quatrième couche interne thermoplastique (144) étant égale ou inférieure à la troisième température de ramollissement (T3), et/ou
une cinquième couche interne thermoplastique, en particulier transparente (145), la température de ramollissement de la cinquième couche interne thermoplastique (145) étant égale ou inférieure à la troisième température de ramollissement (T3), et/ou
une sixième couche interne thermoplastique, en particulier transparente (146), la température de ramollissement de la sixième couche interne thermoplastique (146) étant égale ou inférieure à la troisième température de ramollissement (T3).

5. Le dispositif composite polymère (100) selon l'une des revendications 3 ou 4, comprenant en outre
une deuxième batterie, en particulier rechargeable (132), et/ou
des composants électroniques (133), en particulier des composants semi-conducteurs, disposés en particulier sur la couche de support (130), qui forment un circuit électronique, et/ou
au moins un capteur d'empreintes digitales (134) qui est agencé et conçu pour enregistrer et/ou stocker une empreinte digitale, et/ou
au moins une bobine d'induction qui est reliée de manière électriquement conductrice à la première et/ou à la deuxième batterie, et/ou
au moins deux contacts de raccordement qui sont reliés de manière électriquement conductrice à la première et/ou à la deuxième batterie,
la première et/ou la deuxième batterie pouvant être chargées par un courant électrique généré par l'application d'une tension aux contacts de connexion et/ou par un transfert d'énergie inductif à la bobine d'induction.

6. Le dispositif composite polymère (100) selon l'une des revendications précédentes, comprenant en outre
au moins un interrupteur, qui est de préférence entouré d'un élément d'écartement en particulier de forme annulaire,
le ou les interrupteurs et/ou l'élément d'écartement sont disposés entre la première couche de recouvrement (110) et la deuxième couche de recouvrement (120), en particulier sur la couche de support (130), et/ou
le commutateur est conçu pour la mise en service et/ou l'arrêt d'un fonctionnement du circuit électronique et/ou du dispositif d'affichage, et/ou
l'élément d'écartement dépasse de l'interrupteur dans la direction allant de la deuxième couche de recouvrement (120) vers la première couche de recouvrement (110) ou dans la direction allant de la première couche de recouvrement (110) vers la deuxième couche de recouvrement (120).

7. Le dispositif composite polymère (100) selon l'une des revendications précédentes, comprenant en outre
un capteur optique qui est agencé et conçu pour détecter un signe optiquement reconnaissable, en particulier un code QR,
le capteur optique et/ou le circuit électronique sont agencés et conçus pour comparer les signes optiquement reconnaissables détectés avec des informations mémorisées et/ou pour les traiter électroniquement, et/ou
le capteur optique et/ou le circuit électronique sont agencés et conçus pour transmettre les signes optiquement reconnaissables détectés et/ou les informations déterminées sur la base des signes optiquement reconnaissables détectés au dispositif d'affichage, et/ou
le capteur optique est positionné sur le côté de la couche de support (130) opposé au dispositif d'affichage.

8. La méthode de fabrication d'un dispositif composite polymère en forme de carte (100), comprenant les étapes suivantes:
- fournir une première couche de revêtement thermoplastique (110) en un matériau polymère ayant une première température de ramollissement (T1),
- fournir une deuxième couche de recouvrement thermoplastique (120) constituée d'un matériau polymère ayant une deuxième température de ramollissement (T2),
- fournir une couche de support (130)
- fournir une couche interne (140) formée d'au moins une première couche interne thermoplastique (141) constituée d'un matériau polymère ayant une troisième température de ramollissement (T3), la troisième température de ramollissement (T3) étant inférieure à la première température de ramollissement (T1) et inférieure à la deuxième température de ramollissement (T2),
- disposer la couche de support (130) et de la couche interne (140) entre la première couche de recouvrement (110) et la deuxième couche de recouvrement (120), la couche interne (140) entourant au moins partiellement la couche de support (130),
- disposer une première batterie (131) entre la première couche de recouvrement (110) et la deuxième couche de recouvrement (120),
- disposer une première protection contre la surchauffe (137), qui contient un matériau polymère dont la température de ramollissement est supérieure à la troisième température de ramollissement (T3), entre la première batterie (131) et la première couche de recouvrement (110),
- exercer une force de pression sur au moins l'une des couches de recouvrement (120, 130) de telle sorte que la première couche de recouvrement (110) et la deuxième couche de recouvrement (120) soient au moins partiellement pressées contre la couche interne (140),
- chauffer les couches pressées en contact (110, 120, 130) jusqu'à une température de fabrication (TF),
la température de fabrication (TF) est au moins égale à la troisième température de ramollissement (T3),
la température de fabrication (TF) est inférieure à la première température de ramollissement (T1), et
la température de fabrication (TF) est inférieure à la deuxième température de ramollissement (T2).

9. La méthode de fabrication d'un dispositif composite polymère (100) selon la revendication 8, comprenant en outre au moins l'une des étapes suivantes:
- disposer un dispositif d'affichage entre la première couche de recouvrement (110) et la deuxième couche de recouvrement (120), en particulier sur la couche de support (130),
- disposer une deuxième protection contre la surchauffe (138) entre le dispositif d'affichage et/ou la première batterie (131) et la deuxième couche de recouvrement (120), en particulier adjacente à une surface du dispositif d'affichage et/ou de la première batterie (131) tournée vers la deuxième couche de recouvrement (120),
- refroidir les couches (110, 120, 130) jusqu'à une température inférieure à la troisième température de ramollissement (T3),
- relâcher de la force de pression.

10. La méthode de fabrication d'un dispositif composite polymère (100) selon la revendication 8 ou 9, dans laquelle
les composants électroniques, en particulier les composants semi-conducteurs, sont disposés sur la couche de support, en particulier par un procédé d'impression, avant les étapes du procédé.

11. La méthode de fabrication d'un dispositif composite polymère (100) selon l'une des revendications 8 à 10, dans laquelle
le chauffage des couches pressées en applique étant arrêté après une durée prédéterminée, de préférence de 60 secondes, de préférence encore de 30 secondes.
